(19) 

**Europäisches Patentamt**
**European Patent Office**
**Office européen des brevets**

(11) **EP 2 738 932 B1**

(12) **EUROPEAN PATENT SPECIFICATION**

(45) Date of publication and mention
of the grant of the patent:
**23.05.2018 Bulletin 2018/21**

(51) Int Cl.:
*H02M 7/48* (2007.01)     *H02M 3/28* (2006.01)
*H02M 1/32* (2007.01)     *H02M 3/335* (2006.01)

(21) Application number: **13760374.2**

(22) Date of filing: **23.01.2013**

(86) International application number:
**PCT/CN2013/070864**

(87) International publication number:
**WO 2013/135111 (19.09.2013 Gazette 2013/38)**

(54) **SECONDARY POWER SYSTEM AND METHOD FOR SUPPRESSING VOLTAGE TRANSIENT IN THE SECONDARY POWER SYSTEM**

SEKUNDÄRSTROMSYSTEM UND VERFAHREN ZUR UNTERDRÜCKUNG VON ÜBERGANGSSPANNUNGEN IN DEM SEKUNDÄRSTROMSYSTEM

SYSTÈME D'ALIMENTATION SECONDAIRE ET PROCÉDÉ DE SUPPRESSION DES TRANSITOIRES DE TENSION DANS LE SYSTÈME D'ALIMENTATION SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2012 CN 201210065182**

(43) Date of publication of application:
**04.06.2014 Bulletin 2014/23**

(73) Proprietor: **Huawei Technologies Co., Ltd.**
**Longgang District**
**Shenzhen, Guangdong 518129 (CN)**

(72) Inventors:
• **ZHANG, Zhenyu**
**Shenzhen**
**Guangdong 518129 (CN)**

• **FAN, Xiaodong**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A2- 1 503 489**     **CN-A- 101 841 226**
**CN-A- 102 611 322**     **JP-A- H07 142 178**
**US-A1- 2010 231 183**     **US-A1- 2011 316 511**
**US-B1- 6 593 725**     **US-B2- 6 819 154**

## Description

### TECHNICAL FIELD

The present invention relates to the field of electronics technology, and in particular, to a secondary power supply system and a method for suppressing voltage transient in a secondary power supply system.

### BACKGROUND

In a traditional secondary power supply system, a simulated control chip is used for control; its built-in cycle-by-cycle module (cycle-by-cycle) restriction circuit can adjust duty cycle according to change of an input voltage, to achieve the purpose of suppressing fluctuation of an output voltage, in which, the simulated control chip is located at an input terminal (called a primary side) of the secondary power supply system. However, to meet intelligent requirements of the secondary power supply system, such as communication, adjusting of a working status according to an instruction from a host computer, adjusting of a loop adaptively, and adjusting of duty cycle adaptively, merely using a simulated control chip is not enough; therefore, a digital control chip needs to be added to the secondary power supply system for control, in which, the digital control chip is located at an output terminal (called a secondary side) of the secondary power supply system, resulting in that response of digital power supply to change of an input voltage is slower than simulated power supply. When voltage transient occurs on the input voltage, such as in a surge (surge) process, an output voltage fluctuates dramatically, even triggering overvoltage protection of another module and causing a power failure of the secondary power supply system; so voltage transient must be suppressed, to prevent dramatic fluctuation of the output voltage.

EP 1 503 489 A2 discloses a system and method to limit a maximum duty cycle and/or provide a volt-second clamp for a pulse-width modulated (PWM) signal. Depending on the circuit topology, this approach can limit the absolute duty cycle or operate as a volt-second clamp in which the duty cycle is limited as a function of a variable input control voltage, such as a line voltage. The duty cycle can be selectively programmed by setting one or more external reference components, such as one or more respective resistors. Additionally, through component matching, desired clamping can be achieved with a high level of accuracy.

US 6 593 725 B1 discloses an apparatus comprising a first circuit and a second circuit. The first circuit may be configured to regulate an output voltage generated in response to an input signal and a feedback of the output voltage. The second circuit may be configured to further regulate the output voltage in response to the input signal.

US 2010/231183 A1 discloses a power converter with improved line transient, comprising: a power stage circuit including at least one power transistor switch which operates to convert an input voltage to an output voltage; an error amplifier comparing a feedback signal with a reference signal to generate an error signal; an input voltage instant variation extraction circuit extracting an instant variation of the input voltage and generating a signal relating to the instant variation; and a PWM comparator generating a PWM signal according to at least a ramp signal, the error signal, and the signal relating to the instant variation, to thereby control the operation of the power transistor switch in the power stage circuit.

In the prior art, commonly, detecting a front-end voltage of an output inductor on the secondary side is used to trigger a control module to restrict duty cycle, to achieve purposes of restricting voltage transient and preventing dramatic fluctuation of an output voltage. During research and practice of the prior art, the inventor of the present invention finds out that, because sampling of the front-end voltage of the output inductor on the secondary side is slower than sampling of an input voltage signal on the primary side in the prior art, voltage transient cannot be timely responded to and an effect of suppressing voltage transient is not good. Furthermore, a problem of the present invention includes providing an alternative to the solutions disclosed in EP 1 503 489 A2 and US 2010/231183 A1.

### SUMMARY

The present invention provide a secondary power supply system according to claim 1 and a method for suppressing voltage transient in a secondary power supply system according to claim 5.

A secondary power supply system includes a feedforward circuit, a transformer, and a digital control module; where:

the feedforward circuit is located at the primary side of the transformer, and is configured to receive an input voltage of the secondary power supply system and a drive rectangular wave that is sent by the digital control module, obtain a triangular wave whose frequency is equal to a frequency of the drive rectangular wave according to the input voltage and a duty cycle of the drive rectangular wave, compare the triangular wave with a received direct current reference level to obtain an overvoltage protection reference voltage, and performs an AND operation between the overvoltage protection reference voltage and the drive rectangular wave to obtain the drive rectangular wave that has undergone the AND operation; the direct current reference level reflects an output clamping voltage value, and can be adjusted when voltage transient occurs on the input voltage, so as to reduce a margin between the output clamping voltage value and a rated output voltage;

the transformer is configured to obtain the output voltage according to the input voltage, a duty cycle of the drive rectangular wave that has undergone the AND operation sent by a feedforward circuit, and a turn ratio of the primary side of the transformer to the secondary side of the transformer;

the digital control module is located at the secondary side of the transformer and is configured to output the drive rectangular wave to the feedforward circuit.

Optionally, the feedforward circuit may include a voltage-second product circuit, a reference voltage circuit, an input voltage transient response circuit, a comparison circuit, and an AND circuit; where:

the voltage-second product circuit is configured to receive the input voltage and the drive rectangular wave that is sent by the digital control module, integrate the input voltage and the duty cycle of the drive rectangular wave to obtain the peak level of the triangular wave whose frequency is equal to the frequency of the drive rectangular wave, and send the triangular wave to the comparison circuit;

the reference voltage circuit is configured to generate the direct current reference level, and send the direct current reference level to the input voltage transient response circuit; the direct current reference level reflects the output clamping voltage value;

the input voltage transient response circuit is configured to receive the direct current reference level sent by the reference voltage circuit, adjust the direct current reference level when voltage transient occurs on the input voltage, so as to reduce the margin between the output clamping voltage value and the rated output voltage, and send the adjusted direct current reference level to a comparison circuit;

the comparison circuit is configured to compare the adjusted direct current reference level and the triangular wave; in each period of the drive rectangular wave, if the adjusted direct current reference level is higher than the triangular wave, the output overvoltage protection reference voltage is at a high level; if the adjusted direct current reference level is lower than the triangular wave, the output overvoltage protection reference voltage is at a low level;

the AND circuit is configured to perform an AND operation between the overvoltage protection reference voltage output by the comparison circuit and the drive rectangular wave, so as to obtain the drive rectangular wave that has undergone the AND operation.

Optionally, the digital control module may further be configured to perform synchronous control on the feedforward circuit.

Optionally, the secondary power supply system may further include an isolation chip; where:

the isolation chip is configured to isolate a module located at the primary side of a transformer and a module located at the secondary side of the transformer from each other;

the digital control module outputs the drive rectangular wave to the feedforward circuit through the isolation chip.

Optionally, the secondary power supply system may also include a synchronous rectifier module;

The synchronous rectifier module is configured to rectify the output voltage output by the transformer to obtain the rectified output voltage.

A method for suppressing voltage transient in a secondary power supply system includes:

receiving, by a feedforward circuit at the primary side of a transformer, an input voltage of the secondary power supply system and a drive rectangular wave that is sent by a digital control module;

obtaining a triangular wave whose frequency is equal to a frequency of a drive rectangular wave according to the input voltage and a duty cycle of the drive rectangular wave;

comparing the triangular wave and a received direct current reference level, so as to obtain the overvoltage protection reference voltage, in which, the direct current reference level reflects an output clamping voltage value and can be adjusted when voltage transient occurs on the input voltage, so as to reduce a margin between an output clamping voltage value and a rated output voltage;

performing an AND operation between the overvoltage protection reference voltage and the drive rectangular wave, so as to obtain the drive rectangular wave that has undergone the AND operation, so that a transformer may obtain the output voltage according to duty cycle of the drive rectangular wave that has undergone the AND operation, the input voltage, and a turn ratio of the primary side of the transformer to the secondary side of the transformer.

Optionally, the method for suppressing voltage transient in a secondary power supply system may further include: generating a direct current reference level, in which, the direct current reference level reflects the output clamping voltage value; adjusting the generated direct current reference level when voltage transient occurs on the input voltage, so as to reduce the margin between the output clamping voltage value and the rated output voltage;

therefore at this time, the comparing the triangular wave and a received direct current reference level, so as to obtain the overvoltage protection reference voltage is: comparing the triangular wave with the adjusted direct current reference level, so as to obtain the overvoltage protection reference voltage.

Optionally, the comparing the triangular wave and a received direct current reference level, so as to obtain the overvoltage protection reference voltage may include: comparing the triangular wave with the adjusted direct current reference level; in each period of a drive rectangular wave, if the adjusted direct current reference level is higher than the triangular wave, the output overvoltage protection reference voltage is at a high level; if the adjusted direct current reference level is lower than the triangular wave, the output overvoltage protection reference voltage is at a low level.

Optionally, the feedforward circuit may include a voltage-second product circuit, a reference voltage circuit, an input voltage transient response circuit, a comparison circuit, and an AND circuit, and at this time, a specific method for suppressing voltage transient in the secondary i power supply system is as follows:

the voltage-second product circuit receives the input voltage and the drive rectangular wave that is sent by the digital control module, integrates the input voltage and the duty cycle of the drive rectangular wave to obtain the triangular wave whose frequency is equal to the frequency of the drive rectangular wave, and sends the triangular wave to the comparison circuit;

the reference voltage circuit generates the direct current reference level, and sends the direct current reference level to the input voltage transient response circuit; the direct current reference level reflects the output clamping voltage value;

the input voltage transient response circuit receives the direct current reference level sent by the reference voltage circuit, adjusts the direct current reference level when voltage transient occurs on the input voltage, so as to reduce the margin between the output clamping voltage value and the rated output voltage, and sends the adjusted direct current reference level to the comparison circuit;

the comparison circuit compares the adjusted direct current reference level and the triangular wave; in each period of the drive rectangular wave, if the adjusted direct current reference level is higher than the triangular wave, the output overvoltage protection reference voltage is at a high level; if the adjusted direct current reference level is lower than the triangular wave, the output overvoltage protection reference voltage is at a low level;

the AND circuit performs an AND operation between the overvoltage protection reference voltage output by the comparison circuit and the drive rectangular wave, so as to obtain the drive rectangular wave that has undergone the AND operation.

In addition, optionally, the method for suppressing voltage transient in the secondary power supply system may further include: accepting synchronous control performed by a digital control module.

Embodiments of the present invention obtain a triangular wave whose frequency is equal to a frequency of a drive rectangular wave according to the received input voltage and a duty cycle of the drive rectangular wave, set a direct current reference level that may reflect an output clamping current value, adjust the direct current reference level when voltage transient occurs on the input voltage to reduce the margin between the output clamping voltage value and the rated output voltage, compare the triangular wave with the adjusted direct current reference level to obtain an overvoltage protection reference voltage, perform an AND operation between the overvoltage protection reference voltage and the drive rectangular wave to obtain the drive rectangular wave that has undergone the AND operation, and use the drive rectangular wave that has undergone the AND operation to control an output voltage so that the output voltage may still keep stable when voltage transient, such as a surge, occurs on the input voltage, to prevent triggering of overvoltage protection by dramatic fluctuation of the output voltage; because the solution can pull down the direct current reference level to reduce the margin between the output clamping voltage value and the rated output voltage in the case of voltage transient, such as a surge, it can timely respond to voltage transient and provide good effect of voltage transient suppression; in addition, the solution can restore or increase the margin between the clamping voltage value and the rated output voltage, to prevent a mis-operation in normal work due to the margin between the clamping voltage value and the rated output voltage being too small and greatly improve stability of a secondary power supply system.

**BRIEF DESCRIPTION OF DRAWINGS**

To illustrate the technical solutions in the embodiments of the present invention or in the prior art more clearly, the following briefly describes the accompanying drawings required for describing the embodiments or the prior art. Apparently, the accompanying drawings in the following descriptions merely show some of the embodiments of the present invention, and a person of ordinary skill in the art can derive other drawings from the accompanying drawings without creative efforts.

FIG. 1 is a schematic diagram of a secondary power supply system according to an embodiment of the present invention;

FIG. 2 is a schematic compositional diagram of a feedforward circuit according to an embodiment of the present invention;

FIG. 3 is a schematic diagram of a relationship between an input voltage, a triangular wave, and a drive rectangular wave;

FIG. 4a is a circuit diagram of a voltage-second product circuit according to an embodiment of the present invention;

FIG. 4b is a circuit diagram of a reference voltage circuit according to an embodiment of the present invention;

FIG. 4c is a circuit diagram of an input voltage transient response circuit according to an embodiment of the present invention;

FIG. 4d is a circuit diagram of a comparison circuit according to an embodiment of the present invention;

FIG. 4e is a circuit diagram of an AND circuit according to an embodiment of the present invention;

FIG. 5 is a schematic diagram of a secondary power supply system according to another embodiment of the present invention;

FIG. 6 is a flowchart of a method for suppressing voltage transient in a secondary power supply system according to an embodiment of the present invention;

FIG. 7 is a working sequence diagram of a feedforward circuit according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide a secondary power supply system and a method for suppressing voltage transient in a secondary power supply system. The following describes the system and the method in details.

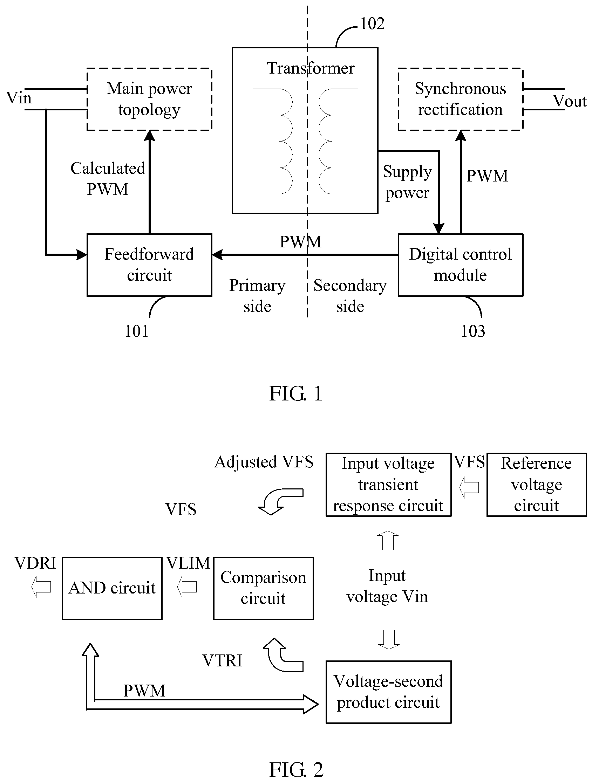

A secondary power supply system, as shown in FIG. 1, includes a feedforward circuit 101, a transformer 102, and a digital control module 103. The details are described as follows:

The feedforward circuit 101 is located at the primary side of the transformer 102 and is configured to receive an input voltage (indicated by Vin) and a drive rectangular wave (indicated by PWM, in which PWM is short for Pulse Width Modulation, that is, pulse width modulation, indicating a drive rectangular wave sent by the digital control module 103) sent by the digital control module 103, obtain a triangular wave (indicated by VTRI) whose frequency is equal to a frequency of the drive rectangular wave PWM according to the received input voltage Vin and a duty cycle of the drive rectangular wave PWM, compare the triangular wave VRTI and a received direct current reference level (indicated by VFS) to obtain an overvoltage protection reference voltage (indicated by VLIM), perform an AND operation between the overvoltage protection reference voltage VLIM and the drive rectangular wave PWM output by the digital control module 103 to obtain the drive rectangular wave that has undergone the AND operation (indicated by VDRI); in which, the direct current reference level VFS may reflect an output clamping voltage value and can be adjusted when voltage transient occurs on the input voltage Vin, so as to reduce a margin between the output clamping voltage value and a rated output voltage (indicated by Vout);

in which, voltage transient that occurs on the input voltage Vin may include a surge, a voltage dip (DIP, voltage DIP) to the input voltage Vin; in which, a surge in the embodiments of the present invention refers to a surge voltage, indicating transient overvoltage that exceeds a normal working voltage range; DIP is also called sudden voltage drop, voltage drop, or voltage sink, and indicates that a voltage of a power supply system decreases suddenly in a short time, exceeding a normal voltage deviation tolerance value, and then returns to a normal voltage level.

The transformer 102 is configured to obtain the output voltage Vout according to the input voltage Vin, the duty cycle of the drive rectangular wave that has undergone the AND operation VDRI sent by the feedforward circuit 101, and a turn ratio of the primary side of the transformer to the secondary side of the transformer 102 (that is, a ratio of turns of the primary side of the transformer 102 to turns of the secondary side of the transformer 102).

The digital control module 103 is located at the secondary side of the transformer 102 and is configured to output the drive rectangular wave PWM to the feedforward circuit 101.

It may be seen from the above description that, the embodiment of the present invention adds the feedforward circuit 101 to the primary side of the transformer 102. The feedforward circuit 101 obtains the triangular wave VTRI whose frequency is equal to the frequency of the drive rectangular wave PWM according to the received input voltage Vin and the duty cycle of the drive rectangular wave PWM, then sets the direct current reference level that may reflect the output clamping voltage value, adjusts the direct current reference level VFS when voltage transient occurs on the input voltage Vin to reduce the margin between the input clamping voltage value and the rated output voltage, then compares the triangular wave VTRI with the adjusted direct current reference level VFS to obtain the overvoltage protection reference voltage VLIM, then performs an AND operation between the overvoltage protection reference voltage VLIM and the drive rectangular wave PWM to obtain the drive rectangular wave that has undergone the AND operation VDRI, uses the drive rectangular wave that has undergone the AND operation VDRI to control the output voltage Vout so that the output voltage Vout may still keep stable when voltage transient occurs on the input voltage, to prevent triggering of overvoltage protection by dramatic fluctuation of the output voltage Vout; because the solution can pull down the direct current reference level VFS to reduce the margin between the output clamping voltage value and the rated output voltage in the case of voltage transient, such as a surge, it can timely respond to voltage transient and provide good effect of voltage transient suppression; in addition, the solution can restore or increase the margin between the clamping voltage value and the rated output voltage, to prevent a mis-operation in normal work due to the margin between the clamping voltage value and the rated output voltage being too small and greatly improve stability of a secondary power supply system.

The following uses an example to further describe the secondary power supply system in detail.

A secondary power supply system, as described in the foregoing embodiment, specifically includes a feedforward circuit 101, a transformer 102, a digital control module 103, in which, the feedforward circuit 101, the transformer 102, and the digital control module 103 may be implemented in a plurality of ways. For example, as shown in FIG. 2, the feedforward circuit 101 may include a voltage-second product circuit, a reference voltage circuit, an input voltage transient response circuit, a comparison circuit, and an AND circuit. The details are described as follows:

1) a voltage-second product circuit;

The voltage-second product circuit is configured to receive an input voltage Vin and a drive rectangular wave PWM sent by the digital control module 103, integrate the received input voltage Vin and a duty cycle of the drive rectangular wave PWM to obtain a peak value of a triangular wave VTRI whose frequency is equal to a frequency of the drive rectangular wave PWM, and send the triangular wave VTRI to the comparison circuit.

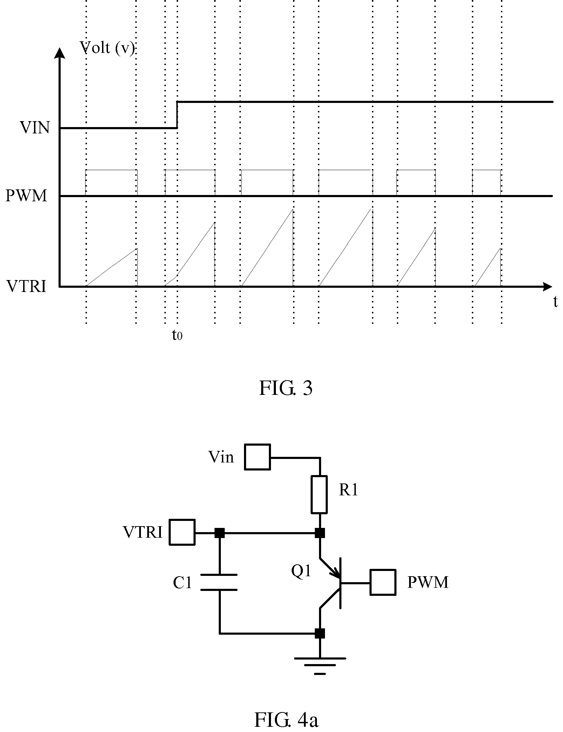

For example, in FIG. 3 which is a schematic diagram of the input voltage Vin, the triangular wave VTRI, and the drive rectangular wave PWM, in which, the frequency of the triangular wave VTRI is equal to the frequency of the drive rectangular wave PWM, and the triangular wave VTRI may be obtained by integrating the input voltage Vin and the duty cycle of the drive rectangular wave PWM.

This is because, for a PWM power supply, the following basic relationship exists:

$$\text{output voltage Vout} = (\text{input voltage Vin} \times \text{duty cycle of a drive rectangular wave}) \, / \, \text{a}$$

$$\text{turn ratio of the primary side of a transformer to the secondary side of the transformer;}$$

So, when the turn ratio of the primary side of the transformer 102 to the secondary side of the transformer 102 (that is, the ratio of turns at the primary side of the transformer 102 to turns at the secondary side of the transformer 102) is fixed, a product value of the input voltage Vin and the duty cycle of the drive rectangular wave directly reflects a rated output voltage of the power supply. Therefore, the voltage-second product circuit may be used to convert the "input voltage Vin x duty cycle of a drive rectangular wave" (or an output voltage) to the peak value of the triangular wave VTRI whose frequency is equal to the frequency of the drive rectangular wave, to input the triangular wave voltage VTRI into the comparison circuit for comparison.

For the structure of the voltage-second product circuit, refer to the prior art. For example, as shown in FIG. 4a, the voltage-second product circuit includes a resistor R1, a triode Q1, and a capacitor C1; in which, after the base electrode of the triode Q1 is connected to the drive rectangular wave PWM, the collector of the diode Q1 is connected to the ground, and the emitter of the triode Q1 is serially connected to the resistor R1, the voltage-second product circuit is connected to the input voltage Vin, the triangular wave VRTI is connected between the resistor R1 and the emitter of the triode Q1, one end of the capacitor C1 is connected between the collector of the triode Q1 and the triangular wave VTRI, and the other end of the capacitor C1 is connected to the emitter of the triode Q1. Of course, the voltage-second product circuit may use other circuit structures, which are not described herein again.

2) a reference voltage circuit;

The reference voltage circuit is configured to generate a direct current reference level VFS, and transmit the direct current reference level VFS to the input voltage transient response circuit.

The direct current reference level VFS may reflect an output clamping voltage value.

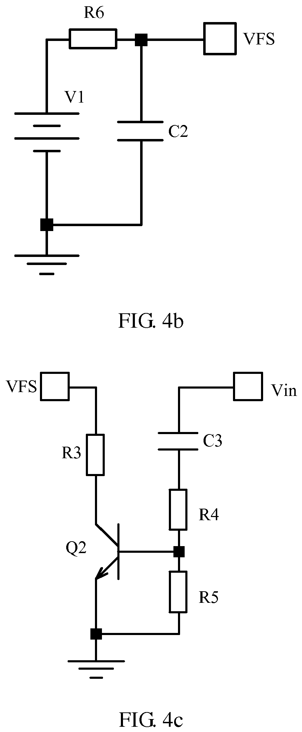

For the detailed structure of the reference voltage circuit, refer to the prior art. For example, as shown in FIG. 4b, the reference voltage circuit includes a power supply VI, a capacitor C2, and a resistor R6; in which, one end of the resistor R6 is connected to the positive terminal of the power supply V1, the other end is connected to one end of the capacitor C2, and the other end of the capacitor C2 is connected to the negative terminal of the power supply VI and then to the ground; the direct current reference level VFS is output between the resistor R6 and the capacitor C2. Certainly, the reference voltage circuit may use other circuit structures, which are not described herein again.

3) an input voltage transient response circuit;

The input voltage transient response circuit is configured to receive the direct current reference level VFS sent by the reference voltage circuit, adjust the direct current reference level VFS when voltage transient, such as a surge, occurs on an input voltage Vin, so as to reduce the margin between the output clamping voltage value and the rated output voltage, and send the adjusted direct current reference level VFS to the comparison circuit.

Because the margin between the output clamping voltage value and the rated output voltage is reduced, an overvoltage protection reference voltage VLIM output by the comparison circuit subsequently may respond to a change of the input voltage Vin more quickly.

It should be noted that, to prevent impact on normal working of the secondary power supply system and prevent triggering of overvoltage protection when the output voltage fluctuates slightly, a certain margin is required between the output clamping voltage value and the rated output voltage. A value of the margin may be set according to a requirement of an actual application, which is not described herein again.

For the structure of the input voltage transient response circuit, refer to the prior art. For example, as shown in FIG. 4c, the input voltage transient response circuit includes a triode Q2, a resistor R3, a resistor R4, a resistor R5, and a capacitor C3; in which, the base electrode of the triode Q2 is connected to the ground through the resistor R5 in one aspect, and in another aspect, is connected to the input voltage Vin through the resistor R4 and the capacitor C3, the collector of the triode Q2 is connected to the direct current reference level VFS through the resistor R3, and the emitter of the triode Q2 is grounded. Certainly, the input voltage transient response circuit may use other circuit structures, which are not described herein again.

4) a comparison circuit;

The comparison circuit is configured to compare the adjusted direct current reference level VFS output by the input voltage transient response circuit and the level of the triangular wave VTRI output by the voltage-second product circuit; in each period of the drive rectangular wave PWM, if the adjusted direct current reference level VFS is higher than the triangular wave VTRI, the output overvoltage protection reference voltage VLIM is at a high level; if the adjusted direct current reference level VFS is lower than the triangular wave VTRI, the output overvoltage protection reference voltage VLIM is at a low level.

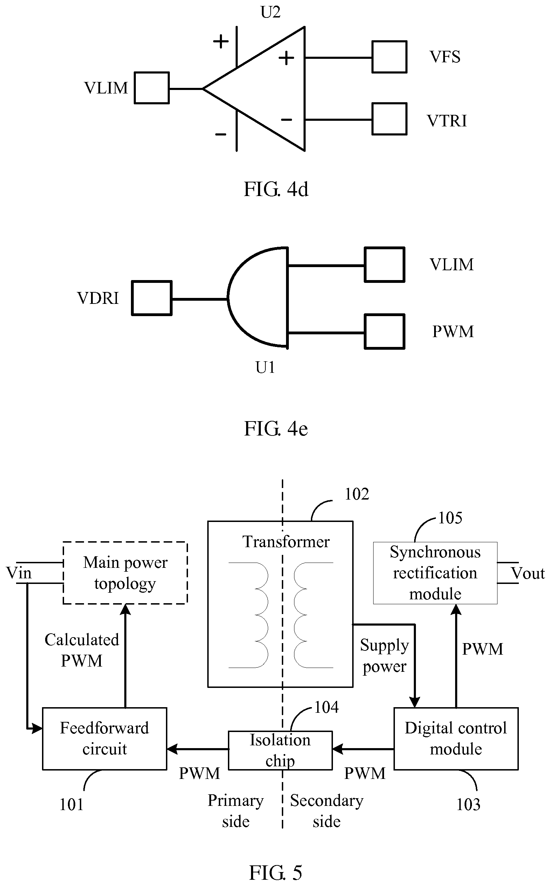

For the structure of the input voltage transient response circuit, refer to the prior art. For example, as shown in FIG. 4d, the comparison circuit include a comparator U2, in which, an input terminal of the negative terminal of the comparator U2 is connected to the triangular wave VTRI, an input terminal of the positive terminal of the comparator U2 is connected to the adjusted direct current reference level VFS, and an output terminal of the comparator U2 is the overvoltage protection reference voltage VLIM. Certainly, a comparison circuit may use other circuit structure, and is not described herein again.

5) an AND circuit;

The AND circuit is configured to perform an AND operation between the overvoltage protection reference voltage VLIM output by the comparison circuit and the drive rectangular wave PWM, so as to obtain the drive rectangular wave that has undergone the AND operation, VDRI.

It can be seen that, when an output voltage Vout is higher than an output clamping voltage value, a duty cycle of VDRI output by the AND circuit decreases, to decrease the output voltage Vout, so that it does not exceed a coming output clamping voltage value (also called a to-be clamping output voltage value).

For the structure of the input voltage transient response circuit, refer to the prior art. For example, as shown in FIG. 4e, the AND circuit includes an AND gate U1, in which, an input terminal of the AND gate U1 is connected to the overvoltage protection reference voltage VLIM, an input terminal of the AND gate U1 is connected to the drive rectangular wave PWM, and the AND gate U1 outputs the drive rectangular wave that has undergone the AND operation VDRI. Certainly, the AND circuit may use other circuit structures, which are not described herein again.

After the AND circuit outputs the drive rectangular wave that has undergone the AND operation VDRI, the transformer 102 obtains the output voltage Vout according to the input voltage Vin, the duty cycle of the drive rectangular wave that has undergone the AND operation VDRI, and the turn ratio of the primary side of the transformer to the secondary side of the transformer 102 (that is, the ratio of turns at the primary side of the transformer 102 to turns at the secondary side of the transformer 102). That is:
the transformer 102 is configured to obtain the output voltage Vout according to the input voltage Vin, the duty cycle of the drive rectangular wave that has undergone the AND operation VDRI sent by the AND circuit, and the turn ratio of the primary side of the transformer to the secondary side of the transformer 102 (that is, the ratio of turns at the primary side of the transformer 102 to turns at the secondary side of the transformer 102).

In addition, it should be noted that, the digital control module 103 has other control functions besides outputting a drive rectangular wave PWM to the feedforward circuit 101. For example, the digital control module 103 can perform synchronous control on each module in the secondary power supply system, and further can perform overvoltage protection, over-temperature protection, over-current protection, short-circuit protection, and/or current equalization protection, and so on, for the secondary power supply system. That is:

the digital control module 103 is also configured to perform synchronous control on each module in the secondary power supply system, such as perform synchronous control on the feedforward circuit, and/or,
the digital control module 103 is further configured to perform overvoltage protection, over-temperature protection, over-current protection, short-circuit protection, and/or current equalization protection, and so on, for the secondary power supply system.

For detail about the overvoltage protection, over-temperature protection, over-current protection, short-circuit protection, and current equalization protection, refer to the prior art, and which is not described herein again.

In addition, as shown in FIG. 5, the secondary power supply system may also include an isolation chip 104, in which:
the isolation chip 104 is configured to isolate a module located at the primary side of the transformer 102 and a module located at the secondary side of the transformer 102 from each other; for example, isolate the feedforward circuit 101 and the digital control module 103 from each other.

At this time, the digital control module 103 may output the drive rectangular wave PWM to the feedforward circuit 101 through the isolation chip 104, for example, to be specific, output the drive rectangular wave PWM to the voltage-second product circuit and the AND circuit in the feedforward circuit 101 through the isolation chip 104.

Optionally, the secondary power supply system may also include another module, for example, the primary side of the transformer 102 may also include each module of a main power topology part, and the secondary side of the transformer 102 may also include one or more other processing modules. As shown in FIG. 5, to be specific, the secondary side of the transformer may include a synchronous rectifier module 105 used for synchronous rectification, in which:
the synchronous rectifier module 105 is located at the secondary side of the transformer 102 and is configured to rectify the output voltage Vout output by the transformer 102 to obtain the rectified output voltage Vout.

It may be seen from the foregoing description that, the embodiment adds the feedforward circuit 101 to the primary side of the transformer 102. The feedforward circuit 101 may obtain the triangular wave VTRI whose frequency is equal to the frequency of the drive rectangular wave PWM according to the received input voltage Vin and the duty cycle of the drive rectangular wave PWM, then set the direct current reference level VFS that may reflect the output clamping voltage value, adjust the direct current reference level VFS when voltage transient occurs on the input voltage Vin to reduce the margin between the input clamping voltage value and the rated output voltage, then compare the triangular wave VTRI with the adjusted direct current reference level VFS to obtain the overvoltage protection reference voltage VLIM, then perform an AND operation between the overvoltage protection reference voltage VLIM and the drive rectangular wave PWM to obtain the drive rectangular wave that has undergone the AND operation, VDRI, use the drive rectangular wave that has undergone the AND operation, VDRI, to control the output voltage so that the output voltage Vout may still keep stable when voltage transient occurs on the input voltage Vin, to prevent triggering of overvoltage protection by dramatic fluctuation of the output voltage Vout; because the solution can pull down the direct current reference level VFS to reduce the margin between the output clamping voltage value and the rated output voltage in the case of voltage transient, such as a surge, it can timely respond to voltage transient and provide good effect of voltage transient suppression; in addition, the solution can restore or increase the margin between the clamping voltage value and the rated output voltage, to prevent a mis-operation in normal work due to the margin between the clamping voltage value and the rated output voltage being too small and greatly improve stability of a secondary power supply system.

Correspondingly, an embodiment of the present invention also provides a method for suppressing voltage transient applied to the forgoing secondary power supply system, as follows:

The method for suppressing voltage transient in a secondary power supply system, including: a feedforward circuit 101 that is located at the primary side of a transformer 102 receives an input voltage Vin and a drive rectangular wave PWM sent by a digital control module 103, obtains a triangular wave VTRI whose frequency is equal to a frequency of the drive rectangular wave PWM according to the input voltage Vin and a duty cycle of the drive rectangular wave PWM, compares the triangular wave VTRI with the received direct current reference level VFS to obtain an overvoltage protection reference voltage VLIM, in which, the direct current reference level VFS reflects an output clamping voltage value and can be adjusted when voltage transient occurs on the input voltage Vin to reduce a margin between the output clamping voltage value and the rated output voltage, and performs an AND operation between the overvoltage protection reference voltage VLIM and the drive rectangular wave PWM, so as to obtain a calculated drive rectangular VDRI, so that the transformer obtains the output voltage Vout according to a duty cycle of the drive rectangular wave that has undergone the AND operation, VDRI, the input voltage Vin, and a turn ratio of the primary side of the transformer to the secondary side of the transformer 102.

Voltage transient that occurs on the input voltage Vin may include a surge, a voltage dip (DIP, voltage DIP) to the input voltage Vin.

In the solution, because the feedforward circuit 101 is added at the primary side the transformer 102 in the secondary power supply system, and the feedforward circuit 101 can adjust the direct current reference level VFS in the case of voltage transient, such as a surge, to pull down the direct current reference level VFS, and reduce the margin between the output clamping voltage value and the rated output voltage, the secondary power supply system can respond to voltage transient timely and provide good effect of voltage transient suppression; after the voltage tends to be stable, the secondary power supply system may restore or increase the margin between the clamping voltage value and the rated output voltage, to prevent a mis-operation in normal work due to the margin between the clamping voltage value and the rated output voltage being too small and greatly improve stability of the secondary power supply system.

The following uses an example to further describe the method for suppressing voltage transient in the secondary power supply system in detail. For the structure of the secondary power supply system, refer to the foregoing embodiments.

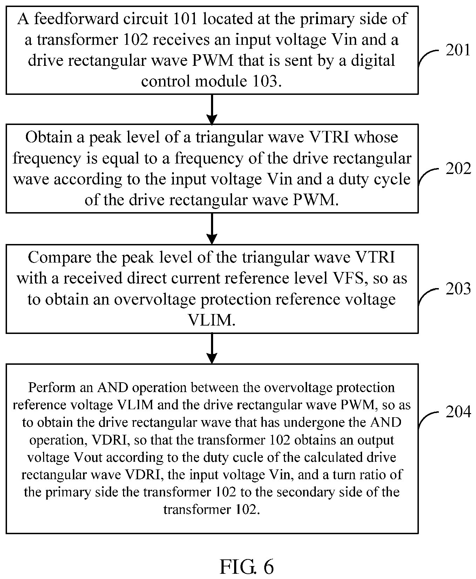

As shown in FIG. 6, a detailed process of the method for suppressing voltage transient in the secondary power supply system may be as follows:

201: A feedforward circuit 101 at the primary side of a transformer 102 receives an input voltage Vin and a drive rectangular wave PWM that is sent by a digital control module 103.

The digital control module 103 is located at the secondary side of the transformer 102; the feedforward circuit 101 may include a voltage-second product circuit, a reference voltage circuit, an input voltage transient response circuit, a comparison circuit, and an AND circuit.

To be specific, the voltage-second product circuit may receive the input voltage Vin and the drive rectangular wave PWM that is sent by the digital control module 103.

For the structure of the voltage-second product circuit, refer to the foregoing embodiments.

202: The feedforward circuit 101 obtains a triangular wave VTRI whose frequency is equal to a frequency of the drive rectangular wave according to the input voltage Vin and a duty cycle to the drive rectangular wave PWM. For example, the detail may be as follows:

In step 201, if the voltage-second product circuit has received the input voltage Vin and the drive rectangular wave PWM that is sent by the digital control module 103, the voltage-second product circuit may integrate the input voltage Vin and the duty cycle of the drive rectangular wave PWM to obtain the peak value of the triangular wave VTRI whose frequency is equal to the frequency of the drive rectangular wave PWM, and send the triangular wave VTRI to the comparison circuit.

203: The feedforward circuit 101 compares the triangular wave VTRI and a received direct current reference level VFS, so as to obtain an overvoltage protection reference voltage VLIM.

The direct current reference level VFS is a level that may reflect an output clamping voltage value and be adjusted when voltage transient (such as a surge or DIP) occurs on the input voltage Vin, so as to reduce a margin between the output clamping voltage value and a rated output voltage; the direct current reference level VFS may be provided to the feedforward circuit 101 by another module or be generated by the feedforward circuit 101 itself, and can be adjusted when voltage transient (such as a surge or DIP) occurs on the input voltage Vin, so as to reduce the margin between the output clamping voltage value and the rated output voltage. That is, the method for suppressing voltage transient in a secondary power supply system may further include:

The generated direct current reference level VFS is adjusted when voltage transient (such as a surge and DIP) occurs on the input voltage Vin, so as to reduce the margin between the output clamping voltage value and the rated output voltage.

At this time, the step of "compares the triangular wave VTRI with the received direct current reference level VFS to obtain an overvoltage protection reference voltage VLIM" may be as follows: comparing the triangular wave VTRI and the adjusted direct current reference level VFS to obtain the overvoltage protection reference voltage VLIM. For example, comparing the triangular wave VTRI and the adjusted direct current reference level VFS; in each period of the drive rectangular wave PWM, if the adjusted direct current reference level VFS is higher than the triangular wave VTRI, the output overvoltage protection reference voltage VLIM is at a high level; if the adjusted direct current reference level VFS is lower than the triangular wave VTRI, the output overvoltage protection reference voltage VLIM is at a low level.

For example, to be specific, the reference voltage circuit generates the direct current reference level VFS, sends the direct current reference level VFS to the input voltage transient response circuit; the input voltage transient response circuit receives the direct current reference level VFS, and adjusts the direct current reference level VFS when voltage transient, such as a surge or DIP, occurs on the input voltage, so as to reduce the margin between the output clamping voltage value and the rated output voltage, and sends the adjusted direct current reference level VFS to the comparison circuit, the comparison circuit compares the adjusted direct current reference level VFS with the triangular wave VTRI; in each period of the drive rectangular wave PWM, if the adjusted direct current reference level VFS is higher than the triangular wave VTRI, the output overvoltage protection reference voltage VLIM is at a high level; if the adjusted direct current reference level VFS is lower than the triangular wave VTRI, the output overvoltage protection reference voltage VLIM is at a low level.

204: The feedforward circuit 101 performs an AND operation between the overvoltage protection reference voltage VLIM and the drive rectangular wave PWM, so as to obtain the drive rectangular wave that has undergone the AND operation, VDRI, so that the transformer 102 obtains an output voltage Vout according to a duty cycle of the calculated rectangular wave VDRI, the input voltage Vin, and a turn ratio of the primary side of the transformer to the secondary side of the transformer 102. For example, the detail may be as follows:

If the feedforward circuit 101 includes the voltage-second product circuit, the reference voltage circuit, the input voltage transient response circuit, the comparison circuit, and the AND circuit, the AND circuit may perform an AND operation between the overvoltage protection reference voltage VLIM output by the comparison circuit and the drive rectangular wave PWM, so as to obtain the drive rectangular wave that has undergone the AND operation, VDRI.

In addition, each module of a secondary power supply system may accept other control performed by the digital control module 103, such as synchronous control, overvoltage protection, over-temperature protection, over-current protection, short-circuit protection, and/or current equalization protection. That is, the method for suppressing voltage transient in a secondary power supply system may further include:

accepting synchronous control performed by the digital control module 103, and/or,
accepting control such as overvoltage protection, over-temperature protection, over-current protection, short-circuit protection, and/or current equalization protection that are performed by the digital control module 103.

It may be seen from the foregoing description that, the embodiment adds the feedforward circuit 101 to the primary side of the transformer 102. The feedforward circuit 101 obtains the triangular wave VTRI whose frequency is equal to the frequency of the drive rectangular wave PWM according to the received input voltage Vin and the duty cycle of the drive rectangular wave PWM, then sets the direct current reference level that may reflect the output clamping voltage value, adjusts the direct current reference level VFS when voltage transient occurs on the input voltage Vin to reduce the margin between the input clamping voltage value and the rated output voltage, then compares the triangular wave VTRI with the adjusted direct current reference level VFS to obtain the overvoltage protection reference voltage VLIM, then performs an AND operation between the overvoltage protection reference voltage VLIM and the drive rectangular wave PWM to obtain the drive rectangular wave that has undergone the AND operation, VDRI, uses the drive rectangular wave that has undergone the AND operation, VDRI, to control the output voltage Vout so that the output voltage Vout may still keep stable when voltage transient occurs on the input voltage, to prevent triggering of overvoltage protection by dramatic fluctuation of the output voltage Vout; because the solution can pull down the direct current reference level VFS to reduce the margin between the output clamping voltage value and the rated output voltage in the case of voltage transient, it can timely respond to voltage transient and provide good effect of voltage transient suppression; in addition, the solution can restore or increase the margin between the clamping voltage value and the rated output voltage, to prevent a mis-operation in normal work due to the margin between the clamping voltage value and the rated output voltage being too small and greatly improve stability of a secondary power supply system.

According to the secondary power supply system and the method for suppressing voltage transient in the secondary power supply system described in the foregoing embodiments, the following uses an example to actually test the secondary power supply system and effect of the method for suppressing voltage transient.

In the embodiment, the secondary power supply system, including a feedforward circuit 101, a transformer 102, a digital control module 103, an isolation chip 104, and a synchronous rectifier module 105, in which, the feedforward circuit 101 includes a voltage-second product circuit, a reference voltage circuit, an input voltage transient response circuit, a comparison circuit, and an AND circuit, and voltage transient being a surge voltage, is taken as an example.

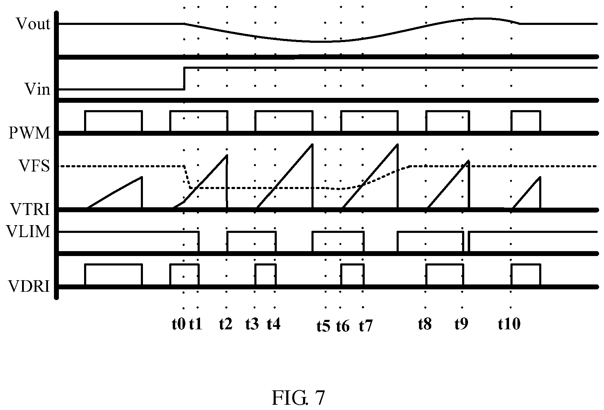

The structure of the secondary power supply system is shown in FIG. 1; detailed structures of the voltage-second product circuit, the reference voltage circuit, the input voltage transient response circuit, the comparison circuit, and the AND circuit are shown in FIG. 4a, FIG. 4b, FIG. 4c, FIG. 4d, and FIG. 4e, respectively. In an actual test, a working sequence diagram of the feedforward circuit 101 is shown in FIG. 7; FIG. 7 includes waveform of each level, including an output voltage Vout, an input voltage Vin, a drive rectangular wave PWM, a direct current reference level VFS, a triangular wave VTRI, an overvoltage protection reference voltage VLIM, the drive rectangular wave that has undergone the AND operation, VDRI.

It may be seen from FIG. 7 that, before t0, the duty cycle of the triangular wave VDRI and the duty cycle of the drive rectangular wave PWM are consistent and are fixed values. At t0, because the input voltage Vin increases, rise slope of the triangular wave VTRI generated by the voltage-second product circuit also increases, causing a peak voltage of VTRI to exceed the direct current reference level VFS; at the same time, a switch Q2 of the input voltage transient response circuit is turned on due to the mutation of the input voltage Vin, so the direct current reference level VFS output by the input voltage transient response circuit rapidly drops to a fixed value, causing time t1 for the overvoltage protection reference voltage VLIM output by the comparison circuit to drop (that is, to a low level) to be advanced (it should be at t2 in FIG. 7), therefore, clamping effect is enhanced; besides, the AND circuit restricts the duty cycle of the drive rectangular wave PWM, so that the duty cycle of the drive rectangular wave VDRI output by the AND circuit is smaller than the duty cycle of the original drive rectangular wave PWM. From this moment (moment t0), the output voltage Vout starts to decrease.

When t5 is reached, the switch Q2 of the input voltage transient response circuit is finally turned off because the input voltage Vin changes to a fixed value, a capacitor C2 of the reference voltage circuit starts to be charged, and the direct current reference level VFS starts to increase and finally is restored to its original voltage value. In this process, the time for the overvoltage protection reference level VLIM to be low (that is, the overvoltage protection reference voltage VLIM be at a low level) decreases gradually (when the adjusted direct current reference level VFS is higher than the leak level of the triangular wave VTRI, the output overvoltage protection reference voltage VLIM is at a high level; when the adjusted direct current reference level VFS is lower than the leak level of the triangular wave VTRI, the output overvoltage protection reference voltage VLIM is at a low level, at this time, the direct current reference level VFS increase gradually whereas the triangular wave VTRI gradually decreases, so time for the overvoltage protection reference level VLIM to be low also gradually decreases).

At t6, the output voltage Vout reaches a lowest value and starts to increase with the decrease of the time of the overvoltage protection reference voltage VLIM being at a low level.

At t8, because a module loop in the secondary power system starts to work, the duty cycle of the PWM sent by the digital control chip 103 starts to decrease; however, the triangular wave VTRI still exceeds the direct current reference level VFS, resulting in that the output voltage Vout reaches a highest value at t9.

After t9, with further decrease of the duty cycle of the drive rectangular wave PWM sent by the digital control chip 103, the output voltage Vout starts to decrease (because: output voltage Vout = (input voltage Vin x duty cycle of the drive rectangular wave) / a turn ratio of the primary side of a transformer to the secondary side of the transformer).

At t10, the output voltage Vout is restored to its original value, and the duty cycle of the drive rectangular wave that has undergone the AND operation, VDRI, sent by the AND circuit and the duty cycle of the rectangular wave PWM output by the digital control module 103 are consistent and a fixed value.

Known from the foregoing tests, when a surge occurs on an input voltage Vin, an output voltage Vout of a secondary power supply system fluctuates slightly, which greatly improves stability of the output voltage Vout, that is, adding a feedforward circuit 101 at the primary side of a transformer 102 can enhance a surge suppression effect on the secondary power supply system; in addition, because an input voltage transient response circuit is added into the feedforward circuit 101, when the surge suppression effect is enhanced, the margin between the direct current reference level VFS and the triangular wave VTRI is increased, preventing a mis-operation in normal work due to the margin between the clamping voltage value and the rated output voltage being too small and solving a tolerance issue for a feedforward device, applicable to massive product application.

In addition, because dramatic fluctuation of the output voltage Vout caused by a surge of the input voltage Vin is suppressed, a test result on DIP (voltage dip) of the secondary power system and a network equipment building system (NEBS, Network Equipment Building System) is enhanced, improving reliability of the secondary power supply system.

Another scenario of voltage transient is similar and is not described herein again.

It should be noted that, the embodiments of the present invention are applicable to a power supply circuit in any topology; the foregoing embodiments are only several modes; it should be understood that, an implementation manner of another power supply circuit is similar to the foregoing embodiments and is not described herein again.

A person of ordinary skill in the art may understand that all or part of the steps of the various methods in the foregoing embodiments may be implemented by a program instructing relevant hardware. The program may be stored in a computer readable storage medium. The storage medium may include: a read only memory (ROM, Read Only Memory), a random access memory (RAM, Random Access Memory), a magnetic disk, or an optical disk, and the like.

The foregoing describes the secondary power supply system and the method for suppressing voltage transient in the secondary power supply system provided in the embodiments of the present invention in detail. Specific examples are used here to describe the principle and the implementation manners of the present invention, and the description of the foregoing embodiments is merely used to help the understanding of the methods and core ideas of the present invention; meanwhile, those of ordinary skill in the art can make modifications and variations to the specific implementation manners and application scope according to the ideas of the present invention. In summary, the contents of the specification shall not be constructed as limitations to the present invention.

**Claims**

1. A secondary power supply system, comprising a feedforward circuit (101), a transformer (102), and a digital control module (103), wherein:

   the feedforward circuit (101) is located at the primary side of the transformer (102) and is configured to receive an input voltage (Vin) of the secondary power supply system and a drive rectangular wave (PWM) that is sent by the digital control module (103), obtain a triangular wave (VTRI) whose frequency is equal to a frequency of the drive rectangular wave according to the input voltage and a duty cycle of the drive rectangular wave, compare the triangular wave (VTRI) with a received direct current reference level (VFS) to obtain an overvoltage protection reference voltage (VLIM), and perform an AND operation between the overvoltage protection reference voltage and the drive rectangular wave to obtain the drive rectangular wave that has undergone the AND operation (VDRI); the direct current reference level reflects an output clamping voltage value, and can be adjusted when voltage transient occurs on the input voltage, so as to reduce a margin between the output clamping voltage value and a rated output voltage (Vout);
   the transformer (102) is configured to obtain the output voltage according to the input voltage, a duty cycle of the drive rectangular wave that has undergone the AND operation (VDRI) sent by the feedforward circuit, and a turn ratio of the primary side of the transformer to the secondary side of the transformer; and
   the digital control module (103) is located at the secondary side of the transformer and is configured to output the drive rectangular wave to the feedforward circuit wherein the feedforward circuit comprises a voltage-second product circuit, a reference voltage circuit, an input voltage transient response circuit, a comparison circuit, and an AND circuit; wherein:

      the voltage-second product circuit is configured to receive the input voltage and the drive rectangular wave that is sent by the digital control module, integrate the input voltage and the duty cycle of the drive rectangular wave to obtain the triangular wave whose frequency is equal to the frequency of the drive rectangular wave, and send the triangular wave to the comparison circuit;
      the reference voltage circuit is configured to generate the direct current reference level (VFS), and send the direct current reference level to the input voltage transient response circuit; wherein the direct current reference level reflects the output clamping voltage value;
      the input voltage transient response circuit is configured to receive the direct current reference level (VFS) sent by the reference voltage circuit, adjust the direct current reference level when voltage transient occurs on the input voltage, so as to reduce the margin between the output clamping voltage value and the rated output voltage, and send the adjusted direct current reference level to the comparison circuit;
      the comparison circuit is configured to compare the adjusted direct current reference level and the triangular wave; in each period of the drive rectangular wave, if the adjusted direct current reference level is higher than the triangular wave, the output overvoltage protection reference voltage is at a high level; if the adjusted direct current reference level is lower than the triangular wave, the output overvoltage protection reference voltage is at a low level; and
      the AND circuit is configured to perform an AND operation between the overvoltage protection reference voltage output by the comparison circuit and the drive rectangular wave, so as to obtain the drive rectangular wave that has undergone the AND operation.

2. The secondary power supply system according to claim 1, wherein:
   the digital control module is further configured to perform synchronous control on the feedforward circuit.

3. The secondary power supply system according to any one of claims 1 to 2, further comprising an isolation chip (104), wherein:

the isolation chip (104) is configured to isolate a module located at the primary side of the transformer and a module located at the secondary side of the transformer from each other;

wherein the digital control module outputs the drive rectangular wave to the feedforward circuit through the isolation chip.

4. The secondary power supply system according to any one of claims 1 to 2, further comprising a synchronous rectifier module (105), wherein:

the synchronous rectifier module (105) is configured to rectify the output voltage (Vout) output by the transformer to obtain the rectified output voltage.

5. A method for suppressing voltage transient in a secondary power supply system, comprising:

receiving (201), by a feedforward circuit at the primary side of a transformer, an input voltage of the secondary power supply system and a drive rectangular wave that is sent by a digital control module;

obtaining (202) a triangular wave (VTRI) whose frequency is equal to a frequency of the drive rectangular wave according to the input voltage and a duty cycle of the drive rectangular wave;

comparing (203) the triangular wave (VTRI) and a received direct current reference level (VFS), so as to obtain an overvoltage protection reference voltage, wherein, the direct current reference level (VFS) reflects an output clamping voltage value and can be adjusted when voltage transient occurs on the input voltage, so as to reduce a margin between the output clamping voltage value and a rated output voltage;

performing (204) an AND operation between the overvoltage protection reference voltage and the drive rectangular wave, so as to obtain the drive rectangular wave that has undergone the AND operation, so that the transformer may obtain the output voltage (Vout) according to a duty cycle of the drive rectangular wave that has undergone the AND operation, the input voltage, and a turn ratio of the primary side of the transformer to the secondary side of the transformer,

wherein the feedforward circuit includes a voltage-second product circuit, a reference voltage circuit, an input voltage transient response circuit, a comparison circuit, and an AND circuit, and specifically, the method comprises:

receiving an input voltage and the drive rectangular wave that is sent by the digital control module, integrating the input voltage and the duty cycle of the drive rectangular wave to obtain the triangular wave whose frequency is equal to the frequency of the drive rectangular wave, and sending the triangular wave to the comparison circuit, by the voltage-second product circuit;

generating, by the reference voltage circuit, the direct current reference level (VFS) and sending the direct current reference level to the input voltage transient response circuit, wherein the direct current reference level reflects the output clamping voltage value;

receiving, by the input voltage transient response circuit, the direct current reference level sent by the reference voltage circuit, adjusting the direct current reference level when voltage transient occurs on the input voltage, so as to reduce the margin between the output clamping voltage value and the rated output voltage, and sending the adjusted direct current reference level to a comparison circuit;

comparing, by the comparison circuit, the adjusted direct current reference level and the triangular wave, wherein, in each period of the drive rectangular wave, if the adjusted direct current reference level is higher than the triangular wave, the output overvoltage protection reference voltage is at a high level; if the adjusted direct current reference level is lower than the triangular wave, the output overvoltage protection reference voltage is at a low level; and

performing, by the AND circuit, an AND operation between the overvoltage protection reference voltage output by the comparison circuit and the drive rectangular wave, so as to obtain the drive rectangular wave that has undergone the AND operation.

6. The method according to claim 5, further comprising:

generating the direct current reference level (VFS), wherein the direct current reference level reflects the output clamping voltage value; and

adjusting the generated direct current reference level (VFS) when voltage transient occurs on the input voltage, so as to reduce the margin between the output clamping voltage value and the rated output voltage;

wherein, the comparing the triangular wave (VTRI) and the received direct current reference level, so as to obtain an overvoltage protection reference voltage is specifically: comparing the triangular wave with the adjusted direct current reference level to obtain the overvoltage protection reference voltage.

**7.** The method according to claim 6, wherein the comparing the triangular wave (VTRI) and a received direct current reference level (VFS), so as to obtain an overvoltage protection reference voltage comprises:
comparing the triangular wave with the adjusted direct current reference level, wherein, in each period of the drive rectangular wave, if the adjusted direct current reference level is higher than the triangular wave, the output over-voltage protection reference voltage is at a high level; if the adjusted direct current reference level is smaller than the triangular wave, the output over-voltage protection reference voltage is at a low level.

**8.** The method according to any one of claims 5 to 7, further comprising:
accepting synchronous control performed by the digital control module.


**Patentansprüche**

**1.** Sekundärstromversorgungssystem, umfassend eine Vorsteuerungsschaltung (101), einen Transformator (102) und ein digitales Steuermodul (103), wobei:

sich die Vorsteuerungsschaltung (101) auf der Primärseite des Transformators (102) befindet und ausgelegt ist, eine Eingangsspannung (Vin) des Sekundärstromversorgungssystems und eine Ansteuer-Rechteckwelle (PWM), die von dem digitalen Steuermodul (103) gesendet wird, zu empfangen, eine Dreieckswelle (VTRI) zu erhalten, deren Frequenz gleich einer Frequenz der Ansteuer-Rechteckwelle entsprechend der Eingangs spannung und einem Tastverhältnis der Ansteuer-Rechteckwelle ist, die Dreieckswelle (VTRI) mit einem empfangenen Gleichstromreferenzpegel (VFS) zu vergleichen, um eine Überspannungsschutz-Referenzspannung (VLIM) zu erhalten, und eine UND-Operation zwischen der Überspannungsschutz-Referenzspannung und der Ansteuer-Rechteckwelle durchzuführen, um die Ansteuer-Rechteckwelle zu erhalten, die die UND-Operation (VDRI) erfahren hat; der Gleichstromreferenzpegel einen Ausgangsklemmspannungswert wiederspiegelt und eingestellt werden kann, wenn eine Übergangs spannung auf der Eingangsspannung auftritt, um eine Spanne zwischen dem Ausgangsklemmspannungswert und einer Nenn-Ausgangsspannung (Vout) zu verringern;
der Transformator (102) ausgelegt ist, die Ausgangsspannung entsprechend der Eingangsspannung, einem Tastverhältnis der Ansteuer-Rechteckwelle, die die UND-Operation (VDRI) erfahren hat, die von der Vorsteuerungsschaltung gesendet wird, und einem Drehverhältnis der Primärseite des Transformators zu der Sekundärseite des Transformators zu erhalten; und
sich das digitale Steuermodul (103) auf der Sekundärseite des Transformators befindet und ausgelegt ist, die Ansteuer-Rechteckwelle an die Vorsteuerungsschaltung auszugeben, wobei die Vorsteuerungsschaltung eine Spannungs-Sekunden-Produkt-Schaltung, eine Referenzspannungsschaltung, eine Eingangsspannungsübergangsreaktionsschaltung, eine Vergleichsschaltung und eine UND-Schaltung umfasst; wobei
die Spannungs-Sekunden-Produkt-Schaltung ausgelegt ist, die Eingangsspannung und die Ansteuer-Rechteckwelle, die von dem digitalen Steuermodul gesendet wird, zu empfangen, die Eingangsspannung und das Tastverhältnis der Ansteuer-Rechteckwelle zu integrieren, um die Dreieckswelle zu erhalten, deren Frequenz gleich der Frequenz der Ansteuer-Rechteckwelle ist, und die Dreieckswelle an die Vergleichsschaltung zu senden;
die Referenzspannungsschaltung ausgelegt ist, den Gleichstromreferenzpegel (VFS) zu erzeugen und den Gleichstromreferenzpegel an die Eingangsspannungsübergangsreaktionsschaltung zu senden; wobei der Gleichstromreferenzpegel den Ausgangsklemmspannungswert wiederspiegelt;
die Eingangsspannungsübergangsreaktionsschaltung ausgelegt ist, den Gleichstromreferenzpegel (VFS), der von der Referenzspannungsschaltung gesendet wird, zu empfangen, den Gleichstromreferenzpegel einzustellen, wenn eine Übergangsspannung auf der Eingangsspannung auftritt, um die Spanne zwischen dem Ausgangsklemmspannungswert und der Nenn-Ausgangsspannung zu verringern, und den eingestellten Gleichstromreferenzpegel an die Vergleichsschaltung zu senden;
die Vergleichsschaltung ausgelegt ist, den eingestellten Gleichstromreferenzpegel und die Dreieckswelle zu vergleichen; in jeder Periode der Ansteuer-Rechteckwelle, wenn der eingestellte Gleichstromreferenzpegel höher als die Dreieckswelle ist, die ausgegebene Überspannungsschutz-Referenzspannung auf einem hohen Pegel ist; wenn der eingestellte Gleichstromreferenzpegel niedriger als die Dreieckswelle ist, die ausgegebene Überspannungsschutz-Referenzspannung auf einem niedrigen Pegel ist; und
die UND-Schaltung ausgelegt ist, eine UND-Operation zwischen der Überspannungsschutz-Referenzspannung, die von der Vergleichsschaltung ausgegeben wird, und der Ansteuer-Rechteckwelle durchzuführen, um die Ansteuer-Rechteckwelle, die die UND-Operation erfahren hat, zu erhalten.

**2.** Sekundärstromversorgungssystem nach Anspruch 1, wobei:

das digitale Steuermodul ferner ausgelegt ist, eine synchrone Steuerung an der Vorsteuerungsschaltung durchzuführen.

3. Sekundärstromversorgungssystem nach einem der Ansprüche 1 bis 2, ferner umfassend einen Isolierchip (104), wobei:

der Isolierchip (104) ausgelegt ist, ein Modul, das sich auf der Primärseite des Transformators befindet, und ein Modul, das sich auf der Sekundärseite des Transformators befindet, voneinander zu isolieren; wobei das digitale Steuermodul die Ansteuer-Rechteckwelle durch den Isolierchip an die Vorsteuerungsschaltung ausgibt.

4. Sekundärstromversorgungssystem nach einem der Ansprüche 1 bis 2, ferner umfassend ein Synchrongleichrichtermodul (105), wobei:
das Synchrongleichrichtermodul (105) ausgelegt ist, die Ausgangsspannung (Vout) gleichzurichten, die von dem Transformator ausgegeben wird, um die gleichgerichtete Ausgangsspannung zu erhalten.

5. Verfahren zur Unterdrückung von Übergangs spannungen in einem Sekundärstromversorgungssystem, umfassend:

Empfangen (201), durch eine Vorsteuerungsschaltung auf der Primärseite eines Transformators, einer Eingangsspannung des Sekundärstromversorgungssystems und einer Ansteuer-Rechteckwelle, die von einem digitalen Steuermodul gesendet wird;
Erhalten (202) einer Dreieckswelle (VTRI), deren Frequenz gleich einer Frequenz der Ansteuer-Rechteckwelle entsprechend der Eingangsspannung und einem Tastverhältnis der Ansteuer-Rechteckwelle ist;
Vergleichen (203) der Dreieckswelle (VTRI) und eines empfangenen Gleichstromreferenzpegels (VFS), um eine Überspannungsschutz-Referenzspannung zu erhalten, wobei der Gleichstromreferenzpegel (VFS) einen Ausgangsklemmspannungswert wiederspiegelt und eingestellt werden kann, wenn eine Übergangs spannung auf der Eingangsspannung auftritt, um eine Spanne zwischen dem Ausgangsklemmspannungswert und einer Nenn-Ausgangsspannung zu verringern;
Durchführen (204) einer UND-Operation zwischen der Überspannungsschutz-Referenzspannung und der Ansteuer-Rechteckwelle, um die Ansteuer-Rechteckwelle zu erhalten, die die UND-Operation erfahren hat, so dass der Transformator die Ausgangsspannung (Vout) entsprechend einem Tastverhältnis der Ansteuer-Rechteckwelle, die die UND-Operation erfahren hat, der Eingangsspannung und einem Drehverhältnis der Primärseite des Transformators zu der Sekundärseite des Transformators erhalten kann,
wobei die Vorsteuerungsschaltung eine Spannungs-Sekunden-Produkt-Schaltung, eine Referenzspannungsschaltung, eine Eingangsspannungsübergangsreaktionsschaltung, eine Vergleichsschaltung und eine UND-Schaltung umfasst, und das Verfahren im Speziellen Folgendes umfasst:

Empfangen einer Eingangsspannung und der Ansteuer-Rechteckwelle, die von dem digitalen Steuermodul gesendet wird, Integrieren der Eingangsspannung und des Tastverhältnisses der Ansteuer-Rechteckwelle, um die Dreieckswelle zu erhalten, deren Frequenz gleich der Frequenz der Ansteuer-Rechteckwelle ist, und Senden der Dreieckswelle an die Vergleichsschaltung durch die Spannungs-Sekunden-Produkt-Schaltung;
Erzeugen des Gleichstromreferenzpegels (VFS) durch die Referenzspannungsschaltung und Senden des Gleichstromreferenzpegels an die Eingangsspannungsübergangsreaktionsschaltung, wobei der Gleichstromreferenzpegel den Ausgangsklemmspannungswert wiederspiegelt;
Empfangen des Gleichstromreferenzpegels, der von der Referenzspannungsschaltung gesendet wird, durch die Eingangsspannungsübergangsreaktionsschaltung, Einstellen des Gleichstromreferenzpegels, wenn eine Übergangsspannung auf der Eingangsspannung auftritt, um die Spanne zwischen dem Ausgangsklemmspannungswert und der Nenn-Ausgangsspannung zu verringern, und Senden des eingestellten Gleichstromreferenzpegels an eine Vergleichsschaltung;
Vergleichen des eingestellten Gleichstromreferenzpegels und der Dreieckswelle durch die Vergleichsschaltung, wobei in jeder Periode der Ansteuer-Rechteckwelle, wenn der eingestellte Gleichstromreferenzpegel höher als die Dreieckswelle ist, die ausgegebene Überspannungsschutz-Referenzspannung auf einem hohen Pegel ist; wenn der eingestellte Gleichstromreferenzpegel niedriger als die Dreieckswelle ist, die ausgegebene Überspannungsschutz-Referenzspannung auf einem niedrigen Pegel ist; und
Durchführen einer UND-Operation zwischen der Überspannungsschutz-Referenzspannung, die von der Vergleichsschaltung ausgegeben wird, und der Ansteuer-Rechteckwelle durch die UND-Schaltung, um die Ansteuer-Rechteckwelle, die die UND-Operation erfahren hat, zu erhalten.

**6.** Verfahren nach Anspruch 5, ferner umfassend:

Erzeugen des Gleichstromreferenzpegels (VFS), wobei der Gleichstromreferenzpegel den Ausgangsklemmspannungswert wiederspiegelt; und

Einstellen des erzeugten Gleichstromreferenzpegels (VFS), wenn eine Übergangsspannung auf der Eingangsspannung auftritt, um die Spanne zwischen dem Ausgangsklemmspannungswert und der Nenn-Ausgangsspannung zu verringern;

wobei das Vergleichen der Dreieckswelle (VTRI) und des empfangenen Gleichstromreferenzpegels, um eine Überspannungsschutz-Referenzspannung zu erhalten, im Speziellen Folgendes ist: Vergleichen der Dreieckswelle mit dem eingestellten Gleichstromreferenzpegel, um die Überspannungsschutz-Referenzspannung zu erhalten.

**7.** Verfahren nach Anspruch 6, wobei das Vergleichen der Dreieckswelle (VTRI) und eines empfangenen Gleichstromreferenzpegels (VFS), um eine Überspannungsschutz-Referenzspannung zu erhalten, Folgendes umfasst:

Vergleichen der Dreieckswelle mit dem eingestellten Gleichstromreferenzpegel, wobei in jeder Periode der Ansteuer-Rechteckwelle, wenn der eingestellte Gleichstromreferenzpegel höher als die Dreieckswelle ist, die ausgegebene Überspannungsschutz-Referenzspannung auf einem hohen Pegel ist; wenn der eingestellte Gleichstromreferenzpegel kleiner als die Dreieckswelle ist, die ausgegebene Überspannungsschutz-Referenzspannung auf einem niedrigen Pegel ist.

**8.** Verfahren nach einem der Ansprüche 5 bis 7, ferner umfassend: Annehmen einer synchronen Steuerung, die von dem digitalen Steuermodul durchgeführt wird.

## Revendications

**1.** Système d'alimentation électrique secondaire, comprenant un circuit de correction aval (101), un transformateur (102) et un module de commande numérique (103), dans lequel :

le circuit de correction aval (101) est situé sur le côté primaire du transformateur (102) et est conçu pour recevoir une tension d'entrée (Vin) du système d'alimentation électrique secondaire et une onde rectangulaire d'attaque (PWM) qui est envoyée par le module de commande numérique (103), obtenir une onde triangulaire (VTRI) dont la fréquence est égale à une fréquence de l'onde rectangulaire d'attaque à partir de la tension d'entrée et d'un rapport cyclique de l'onde rectangulaire d'attaque, comparer l'onde triangulaire (VTRI) à un niveau de référence de courant continu (VFS) reçu pour obtenir une tension de référence de protection contre les surtensions (VLIM), et effectuer une opération ET entre la tension de référence de protection contre les surtensions et l'onde rectangulaire d'attaque pour obtenir l'onde rectangulaire d'attaque qui a été soumise à l'opération ET (VDRI) ; le niveau de référence de courant continu reflète une valeur de tension de calage de sortie et peut être réglé lorsque des transitoires de tension apparaissent sur la tension d'entrée, afin de réduire une marge entre la valeur de tension de calage de sortie et une tension de sortie assignée (Vout) ;

le transformateur (102) est conçu pour obtenir la tension de sortie à partir de la tension d'entrée, d'un rapport cyclique de l'onde rectangulaire d'attaque qui a été soumise à l'opération ET (VDRI) envoyée par le circuit de correction aval, et d'un rapport de spires entre le côté primaire du transformateur et le côté secondaire du transformateur ; et

le module de commande numérique (103) est situé sur le côté secondaire du transformateur et est conçu pour envoyer l'onde rectangulaire d'attaque au circuit de correction aval, le circuit de correction aval comprenant un circuit de produit tension-secondes, un circuit de tension de référence, un circuit de réponse aux transitoires de tension d'entrée, un circuit de comparaison et un circuit ET ; dans lequel :

le circuit de produit tension-secondes est conçu pour recevoir la tension d'entrée et l'onde rectangulaire d'attaque qui est envoyée par le module de commande numérique, intégrer la tension d'entrée et le rapport cyclique de l'onde rectangulaire d'attaque pour obtenir l'onde triangulaire dont la fréquence est égale à la fréquence de l'onde rectangulaire d'attaque, et envoyer l'onde triangulaire au circuit de comparaison ;

le circuit de tension de référence est conçu pour générer le niveau de référence de courant continu (VFS) et envoyer le niveau de référence de courant continu au circuit de réponse aux transitoires de tension d'entrée ; le niveau de référence de courant continu reflétant la valeur de tension de calage de sortie ;

le circuit de réponse aux transitoires de tension d'entrée est conçu pour recevoir le niveau de référence de courant continu (VFS) envoyé par le circuit de tension de référence, régler le niveau de référence de courant continu lorsque des transitoires de tension apparaissent sur la tension d'entrée, afin de réduire la marge entre la valeur de tension de calage de sortie et la tension de sortie assignée, et envoyer le niveau de référence de courant continu réglé au circuit de comparaison ;

le circuit de comparaison est conçu pour comparer le niveau de référence de courant continu réglé à l'onde triangulaire ; dans chaque période de l'onde rectangulaire d'attaque, si le niveau de référence de courant continu réglé est supérieur à l'onde triangulaire, la tension de référence de protection contre les surtensions de sortie est à un niveau haut ; si le niveau de référence de courant continu réglé est inférieur à l'onde triangulaire, la tension de référence de protection contre les surtensions de sortie est à un niveau bas ; et

le circuit ET est conçu pour effectuer une opération ET entre la tension de référence de protection contre les surtensions émise par le circuit de comparaison et l'onde rectangulaire d'attaque, afin d'obtenir l'onde rectangulaire d'attaque qui a été soumise à l'opération ET.

2. Système d'alimentation électrique secondaire selon la revendication 1, dans lequel :
le module de commande numérique est également conçu pour effectuer une commande synchrone sur le circuit de correction aval.

3. Système d'alimentation électrique secondaire selon l'une quelconque des revendications 1 et 2, comprenant également une puce d'isolation (104), dans lequel :

la puce d'isolation (104) est conçue pour isoler l'un de l'autre un module situé sur le côté primaire du transformateur et un module situé sur le côté secondaire du transformateur ;
le module de commande numérique envoyant l'onde rectangulaire d'attaque au circuit de correction aval par l'intermédiaire de la puce d'isolation.

4. Système d'alimentation électrique secondaire selon l'une quelconque des revendications 1 et 2, comprenant également une module redresseur synchrone (105), dans lequel :
le module redresseur synchrone (105) est conçu pour redresser la tension de sortie (Vout) émise par le transformateur pour obtenir la tension de sortie redressée.

5. Procédé pour éliminer les transitoires de tension dans un système d'alimentation électrique secondaire, comprenant les étapes consistant à :

recevoir (201), par un circuit de correction aval situé sur le côté primaire d'un transformateur, une tension d'entrée du système d'alimentation électrique secondaire et une onde rectangulaire d'attaque qui est envoyée par un module de commande numérique ;
obtenir (202) une onde triangulaire (VTRI) dont la fréquence est égale à une fréquence de l'onde rectangulaire d'attaque à partir de la tension d'entrée et d'un rapport cyclique de l'onde rectangulaire d'attaque
comparer (203) l'onde triangulaire (VTRI) et un niveau de référence de courant continu (VFS) reçu afin d'obtenir une tension de référence de protection contre les surtensions, le niveau de référence de courant continu (VFS) reflétant une valeur de tension de calage de sortie et pouvant être réglé lorsque des transitoires de tension apparaissent sur la tension d'entrée, afin de réduire une marge entre la valeur de tension de calage de sortie et une tension de sortie assignée ;
effectuer (204) une opération ET entre la tension de référence de protection contre les surtensions et l'onde rectangulaire d'attaque afin d'obtenir l'onde rectangulaire d'attaque qui a été soumise à l'opération ET, afin que le transformateur puisse obtenir la tension de sortie (Vout) à partir d'un rapport cyclique de l'onde rectangulaire d'attaque qui a été soumise à l'opération ET, de la tension d'entrée et d'un rapport de spires entre le côté primaire du transformateur et le côté secondaire du transformateur,
le circuit de correction aval comprenant un circuit de produit tension-secondes, un circuit de tension de référence, un circuit de réponse aux transitoires de tension d'entrée, un circuit de comparaison et un circuit ET, le procédé comprenant spécifiquement les étapes consistant à :

recevoir une tension d'entrée et l'onde rectangulaire d'attaque qui est envoyée par le module de commande numérique, intégrer la tension d'entrée et le rapport cyclique de l'onde rectangulaire d'attaque pour obtenir l'onde triangulaire dont la fréquence est égale à la fréquence de l'onde rectangulaire d'attaque, et envoyer l'onde triangulaire au circuit de comparaison, par le circuit de produit tension-secondes ;
générer, par le circuit de tension de référence, le niveau de référence de courant continu (VFS) et envoyer le niveau de référence de courant continu au circuit de réponse aux transitoires de tension d'entrée, le niveau de référence de courant continu reflétant la valeur de tension de calage de sortie ;

recevoir, par le circuit de réponse aux transitoires de tension d'entrée, le niveau de référence de courant continu envoyé par le circuit de tension de référence, régler le niveau de référence de courant continu lorsque des transitoires de tension apparaissent sur la tension d'entrée, afin de réduire la marge entre la valeur de tension de calage de sortie et la tension de sortie assignée, et envoyer le niveau de référence de courant continu réglé à un circuit de comparaison ;

comparer, par le circuit de comparaison, le niveau de référence de courant continu réglé à l'onde triangulaire, de telle façon que, dans chaque période de l'onde rectangulaire d'attaque, si le niveau de référence de courant continu réglé est supérieur à l'onde triangulaire, la tension de référence de protection contre les surtensions de sortie soit à un niveau haut ; si le niveau de référence de courant continu réglé est inférieur à l'onde triangulaire, la tension de référence de protection contre les surtensions de sortie soit à un niveau bas ; et

effectuer, par le circuit ET, une opération ET entre la tension de référence de protection contre les surtensions émise par le circuit de comparaison et l'onde rectangulaire d'attaque, afin d'obtenir l'onde rectangulaire d'attaque qui a été soumise à l'opération ET.

6. Procédé selon la revendication 5, comprenant également les étapes consistant à :

générer le niveau de référence de courant continu (VFS), le niveau de référence de courant continu reflétant la valeur de tension de calage de sortie ; et

régler le niveau de référence de courant continu (VFS) généré lorsque des transitoires de tension apparaissent sur la tension d'entrée, afin de réduire la marge entre la valeur de tension de calage de sortie et la tension de sortie assignée ;

dans lequel la comparaison de l'onde triangulaire (VTRI) au niveau de référence de courant continu reçu, effectuée afin d'obtenir une tension de référence de protection contre les surtensions, consiste spécifiquement à : comparer l'onde triangulaire au niveau de référence de courant continu réglé pour obtenir la tension de référence de protection contre les surtensions.

7. Procédé selon la revendication 6, dans lequel la comparaison de l'onde triangulaire (VTRI) à un niveau de référence de courant continu (VFS) reçu, effectuée afin d'obtenir une tension de référence de protection contre les surtensions, comprend l'étape consistant à :

comparer l'onde triangulaire au niveau de référence de courant continu réglé, de telle façon que, dans chaque période de l'onde rectangulaire d'attaque, si le niveau de référence de courant continu réglé est supérieur à l'onde triangulaire, la tension de référence de protection contre les surtensions de sortie soit à un niveau haut ; si le niveau de référence de courant continu réglé est inférieur à l'onde triangulaire, la tension de référence de protection contre les surtensions de sortie soit à un niveau bas.

8. Procédé selon l'une quelconque des revendications 5 à 7, comprenant également l'étape consistant à :

recevoir une commande synchrone effectuée par le module de commande numérique.

FIG. 1

FIG. 2

FIG. 3

FIG. 4a

R6

VFS

V1

C2

FIG. 4b

VFS

Vin

R3

C3

R4

Q2

R5

FIG. 4c

U2

VLIM

+
−

+

−

VFS

VTRI

FIG. 4d

VDRI

VLIM

PWM

U1

FIG. 4e

Vin

Main power
topology

Calculated
PWM

Transformer

Supply
power

102

Synchronous
rectification
module

105

Vout

PWM

Feedforward
circuit

101

PWM

Isolation
chip

104

Primary
side

Secondary
side

PWM

Digital control
module

103

FIG. 5

A feedforward circuit 101 located at the primary side of a transformer 102 receives an input voltage Vin and a drive rectangular wave PWM that is sent by a digital control module 103.

201

Obtain a peak level of a triangular wave VTRI whose frequency is equal to a frequency of the drive rectangular wave according to the input voltage Vin and a duty cycle of the drive rectangular wave PWM.

202

Compare the peak level of the triangular wave VTRI with a received direct current reference level VFS, so as to obtain an overvoltage protection reference voltage VLIM.

203

Perform an AND operation between the overvoltage protection reference voltage VLIM and the drive rectangular wave PWM, so as to obtain the drive rectangular wave that has undergone the AND operation, VDRI, so that the transformer 102 obtains an output voltage Vout according to the duty cucle of the calculated drive rectangular wave VDRI, the input voltage Vin, and a turn ratio of the primary side the transformer 102 to the secondary side of the transformer 102.

204

FIG. 6

FIG. 7

**EP 2 738 932 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1503489 A2
- US 6593725 B1
- US 2010231183 A1